# EUROPEAN PATENT APPLICATION

(11) **EP 2 072 298 A1**
(43) Date of publication of application: **24.06.2009**
(21) Application number: 08720708.0
(22) Date of filing: 12.02.2008
(51) Int. Cl.: B60H 1/22

(54) **AIR CONDITIONING SYSTEM FOR VEHICLE**

(30) Priority: 20.02.2007 JP 2007039115; 31.01.2008 JP 2008020899
(71) Applicant: Calsonic Kansei Corporation, Saitama-shi Saitama 331-8501 (JP)
(72) Inventor: TAKAHASHI, Torahide, Saitama 331-8501 (JP); YOSHIOKA, Hiroki, Saitama 331-8501 (JP); FUJITA, Takashi, Saitama 331-8501 (JP)
(74) Representative: Grünecker, Kinkeldey, Stockmair & Schwanhäusser Anwaltssozietät
(86) International application number: PCT/JP2008/052270
(87) International publication number: WO 2008/102668

(57) **Abstract**

Provided are a heat-pump cooler (A) having a first circulation channel (1) and a heater circulator (B) having a second circulation channel (8). A water-cooling condenser (3) in the first circulation channel (1) is placed in the second circulation channel (8), and causes the first coolant to release its heat to the second coolant. The second circulation channel (8) includes a passage switching valve (14) for switching the passage between a passage passing a radiator (10) and a radiator bypass passage (13). During a heating operation, the passage switching valve (14) causes the second coolant to flow into the radiator bypass passage (13), and the air heated by a heater core (12) is introduced as air-conditioned air into the vehicle cabin. During a cooling operation, the passage switching valve (14) causes the second coolant to flow into the radiator (10), and the air cooled by an evaporator (6) is introduced as air-conditioned air into the vehicle cabin.

## Description

### TECHNICAL FIELD

The present invention relates to a vehicle air conditioning system capable of heating and cooling.

### Background Art

One of the related vehicle air conditioning systems is a system disclosed by Japanese Unexamined Patent Application Publication No. 2002-98430 (Figs. 1 and 9, a fourth embodiment and the like). This vehicle air conditioning system includes: a heat-pump cooler having a first circulation passage in which a first coolant circulates; and a heater circulator having a second circulation passage in which a second coolant circulates.

The first circulation passage in the heat-pump cooler includes a compressor, a radiator of an internal heat exchanger, a heat exchanger for cabin, an expansion valve and a heat exchanger for outside. The heat exchanger for cabin is placed inside an air conditioning duct open to the cabin. The first circulation passage includes various bypass channels and many switching valves for switching the channel of the first coolant.

During a heating operation, the channel of the first coolant is switched so that the internal head exchanger and the heat exchanger for cabin function as a condenser for causing the first coolant to release its heat, and that the heat exchanger for outside functions as an evaporator for causing the first coolant to absorb heat. During a cooling operation, the channel of the first coolant is switched so that the heat exchanger for outside functions as a condenser for causing the first coolant to release its heat and that the heat exchanger for cabin functions as an evaporator for causing the first coolant to absorb heat.

The second circulation passage in the heater circulator includes a pump for circulating the second coolant, a heat receiver of the internal heat exchanger, and a heater core. The heater core is placed inside the air conditioning duct open to the cabin.

The vehicle air conditioning system heats the inside of the vehicle cabin by using the heat exchanger for cabin of the heat-pump cooler and the heater core as its heat sources during its heating operation, and cools the inside of the vehicle cabin by using the heat exchanger for cabin of the heat-pump cooler as its cooling source during its cooling operation.

However, in the related example where the heat-pump cooler is used for the heating and cooling operations, the heat-pump cooler needs many bypass passages and switching valves to switch the passage of the first coolant. This brings about a problem of making the configuration of the heat-pump cooler complicated.

Furthermore, Fig. 1 of Japanese Unexamined Patent Application Publication No. 2002-98430 discloses a system including: a heat-pump heater having a first circulation passage in which a first coolant circulates; and a heater hot-water supply circulator having a second circulation passage in which a second coolant circulates. The first circulation passage of the heat-pump heater includes a compressor, a radiator of an internal heat exchanger, a high-pressure heat exchanger, an expansion valve and a low-pressure heat exchanger. The second circulation passage of the heater hot-water supply circulator includes a pump, a heat receiver of the internal heat exchanger, and a heating heater. This system uses heat, produced by the heat-pump heater, through the high-pressure heat exchanger or the heater hot-water supply circulator. For this reason, this system does not need switching the passage of the first coolant, and thereby has a simple configuration. However, this system is incapable of cooling. Moreover, this system is a heating system for household use, but not for vehicle use.

### DISCLOSURE OF THE INVENTION

The present invention has been made to solve the above-described problems of the related art. An object of the present invention is to provide a system for heating and cooling by use of a heat-pump cooler, specifically, a vehicle air conditioning system which includes a heat-pump cooler whose configuration can be simplified, and accordingly has a simple configuration as a whole system.

In order to accomplish the above-mentioned object, a first aspect of the present invention is a vehicle air conditioning system comprising: a heat-pump cooler including a first circulation channel for circulation of a first coolant; and a heating circulator including a second circulation channel for circulation of a second coolant, wherein the first circulation channel of the heat-pump cooler includes a compressor configured to compress the first coolant, a condenser disposed in the second circulation channel and configured to cause heat of the first coolant to be released to the second coolant, an expander configured to expand the first coolant, and an evaporator configured to cool the air by a heat exchange between the first coolant expanded by the expander and the air, wherein the second circulation channel of the heating circulator includes a pump configured to circulate the second coolant, a heater core configured to heat the air by a heat exchange between the second coolant and the air, and a radiator configured to cause heat of the second coolant to be released, the second coolant being a fluid and exchanging heat with the air through sensible heat transfer, wherein the radiator releases heat to the air outside a vehicle cabin, and wherein the evaporator and the heater core are disposed inside an air conditioning duct allowing the air to be introduced by a fan into the vehicle cabin, the air having passed the air conditioning duct being introduced as air-conditioned air into the vehicle cabin.

According to the above-described aspect of the present invention, the first coolant in the heat-pump cooler may be circulated through a constant route in the first circulation channel in both heating and cooling operations. This allows the heat-pump cooler to have a simple configuration. In addition, the heater circulator may have the configuration in which the second coolant receiving heat from the condenser is circulated in the channel passing the heater core and the radiator. Thus, the vehicle air conditioning system can be used for both cooling and heating by releasing the heat, received from the condenser, to the air outside the vehicle cabin by the radiator, and by releasing the heat, received from the condenser, from the heater core to the inside of the vehicle cabin. Consequently, in the system for heating and cooling by use of the heat-pump cooler, the configuration of the heat-pump cooler can be simplified, and the overall configuration of the air conditioning system can be simple as well. Furthermore, the coolant in the second circulation channel has sensible heat transfer while remaining as a liquid without causing a phase transition. This enhances the heat-transfer efficiency, and enables the vehicle air conditioning system to be compact.

The vehicle air conditioning system may further comprise: a radiator bypass passage configured to bypass the radiator; and a passage switching valve configured to switch passages such that the second coolant flows into any one of the radiator and the radiator bypass passage.

In the above-described configuration, the channel can be changed selectively to allow the second coolant to pass or not to pass the radiator, and thereby its heating performance can be prevented from deteriorating.

The vehicle air conditioning system may further comprise: a heater core bypass passage configured to bypass the heater core; and a passage switching valve configured to switch passages such that the second coolant flows into any one of the heater core and the heater core bypass passage.

In the above-described configuration, the channel can be changed selectively to allow the second coolant to pass or not to pass the heater core, and thereby its cooling performance can be prevented from deteriorating.

The second circulation channel may include a heater configured to heat the second coolant.

During the heating operation, the above-described configuration heats air-conditioned air by using both heat produced in the heat-pump cooler and heat generated by the heater. Even when the vehicle has no large heat source configured of an engine or the like, the above-described configuration is able to exert a sufficient heating performance under a condition where the outdoor temperature is extremely low.

The condenser may be provided upstream of the heater and downstream of the radiator, in the second circulation channel.

According to the above-described configuration, the condenser whose surface temperature is lower than that of the heater exchanges heat with the second coolant earlier than the heater, since the condenser is provided upstream of the heater. This makes the difference in temperature between the condenser and the second coolant larger to a maximum extent, and accordingly enhances the heat exchange efficiency of the condenser.

The vehicle air conditioning system may further comprise discharge means for discharging at least part of air-conditioned air cooled by the evaporator to the outside of the vehicle cabin.

During the heating operation, the above-described configuration prevents lower-temperature air-conditioned air from being mixed with high-temperature air-conditioned air heated by the heater core, because the vehicle air conditioning system includes the discharge means for discharging at least part of air-conditioned air cooled by the evaporator to the outside of the vehicle cabin. Thus, it is possible to further improve the heating performance.

The evaporator and the heater core may be provided in parallel to each other inside the air conditioning duct, and the vehicle air conditioning system may further comprise: separation means for separating air-conditioned air to flow toward the evaporator and air-conditioned air to flow toward the heater core; and mixture means for mixing air-conditioned air cooled by the evaporator and air-conditioned air heated by the heater core together with a predetermined ratio.

The above-described configuration is capable of setting the temperature of air-conditioned air blown out of the air conditioning duct at a desired temperature on the basis of the passenger's temperature setting and the outdoor temperature. This is because the evaporator and the heater core are located in parallel to each other in the air conditioning duct, and because the vehicle air conditioning system includes: the separation means for separating air-conditioned air to flow into the evaporator and air-conditioned air to flow into the heater core; and the mixture means for mixing air-conditioned air cooled by the evaporator and air-conditioned air heated by the heater core together with a predetermined ratio.

The fan may include a first fan configured to blow air-conditioned air toward the evaporator and a second fan configured to blow air-conditioned air toward the heater core.

The above-described configuration has the two fans including the first fan for blowing air-conditioned air to the evaporator, and the second fan for blowing air-conditioned air to the heater core, and thus is capable of controlling the heating performance and the cooling performance of the vehicle air conditioning system by controlling outputs from the two fans.

The vehicle air conditioning system may further comprise air allocation means capable of changing a mixture ratio between the air-conditioned air to flow toward the evaporator and the air-conditioned air to flow toward the heater core, out of the air-conditioned air blown by the first fan and the air-conditioned air blown by the second fan.

The above-described configuration includes the air allocation means capable of changing the mixture ratio between the air-conditioned air to flow into the evaporator and the air-conditioned air to flow into the heater core, out of the air-conditioned air blown by the first fan and the air-conditioned air blown by the second fan. Accordingly, the vehicle air conditioning system is capable of controlling the amount of heated air or cooled air blown to the inside of the vehicle cabin, and of controlling the heating performance and the cooling performance with a finer tuning. Moreover, the' vehicle air conditioning system is capable of increasing the maximum amount of air to be blown to the inside of the vehicle cabin by causing the air allocation means to fully close the passage on the evaporator side or the passage on the heater core side, and concurrently by operating the fans in parallel running.

The first coolant may be carbon dioxide.

The above-described configuration keeps the saturation pressure of the first coolant high even in an extremely low temperature state because the first coolant is carbon dioxide, and accordingly is capable of securing the flow rate of the coolant more reliably.

During a heating operation, the second coolant may be made to flow into the radiator bypass passage by switching the passage switching valve, and the air heated by the heater core may be introduced as air-conditioned air into the vehicle cabin, and during a cooling operation, the second coolant may be made to flow into the radiator by switching the passage switching valve, and the air cooled by the evaporator may be introduced as air-conditioned air into the vehicle cabin.

The above-described configuration achieves a simper configuration of the vehicle air conditioning system than otherwise, because the channel of the second coolant in the heater circulator may be changed selectively to allow the second coolant to pass or not to pass the radiator, on the basis of whether to perform the heating or cooling operation. Consequently, in the heating and cooling system using the heat-pump cooler, the configuration of the heat-pump cooler can be simplified, and the overall configuration of the air conditioning system can be simple as well.

During a heating operation, the second coolant may be made to flow into the heater core by switching the passage switching valve, and during a cooling operation, the second coolant may be made to flow into the heater core bypass passage by switching the passage switching valve.

During a cooling operation, the above-described configuration is capable of preventing the second coolant from releasing its heat in the heater core. For this reason, even though the vehicle air conditioning system has the configuration in which air-conditioned air having passed the evaporator subsequently passes the inside of the heater core, the air-conditioned air cooled by the evaporator is not reheated.

The pump may be provided at an outlet side of the radiator and between a position of the condenser and a confluent point where the radiator and the radiator bypass passage come together.

Even in a case where the second coolant flows via the heater core bypass passage due to failure or the like of the passage switching valve during the heating operation, the above-described configuration causes the pump to suck the second coolant which has flown through the radiator bypass passage, and whose temperature has decreased while flowing in the radiator bypass passage. Accordingly, the pump is prevented from sucking the second coolant immediately after the second coolant is heated by the heater, and the reliability and durability of the pump is enhanced.

### BRIEF DESCRIPTION OF THE DRAWINGS

[Fig. 1] Fig. 1 is a system block diagram of a vehicle air conditioning system according to a first embodiment of the present invention.
[Fig. 2] Fig. 2 is a block diagram showing how an air conditioning duct is configured when the vehicle air conditioning system according to the first embodiment of the present invention performs a heating operation.
[Fig. 3] Fig. 3 is a block diagram showing how the air conditioning duct is configured when the vehicle air conditioning system according to the first embodiment of the present invention performs a cooling operation.
[Fig. 4] Fig. 4 is a block diagram showing how an air conditioning duct is configured when a vehicle air conditioning system according to a second embodiment of the present invention performs a heating operation.
[Fig. 5] Fig. 5 is a block diagram showing how the air conditioning duct is configured when the vehicle air conditioning system according to the second embodiment of the present invention performs a cooling operation.
[Fig. 6] Fig. 6 is a system block diagram of a vehicle air conditioning system according to a third embodiment of the present invention.
[Fig. 7] Fig. 7 is a system block diagram of a vehicle air conditioning system according to a fourth embodiment of the present invention.

### BEST MODES FOR CARRYING OUT THE INVENTION

Hereinbelow, descriptions will be provided for the embodiments of the present invention on the basis of the drawings. As for the descriptions in the drawings, parts which are the same as or similar to one another are denoted by the same or similar reference numerals. Note that the drawings are schematic, and that relationships between thicknesses and flat dimensions, thickness ratios among layers and the like are different from the real ones.

### (First Embodiment)

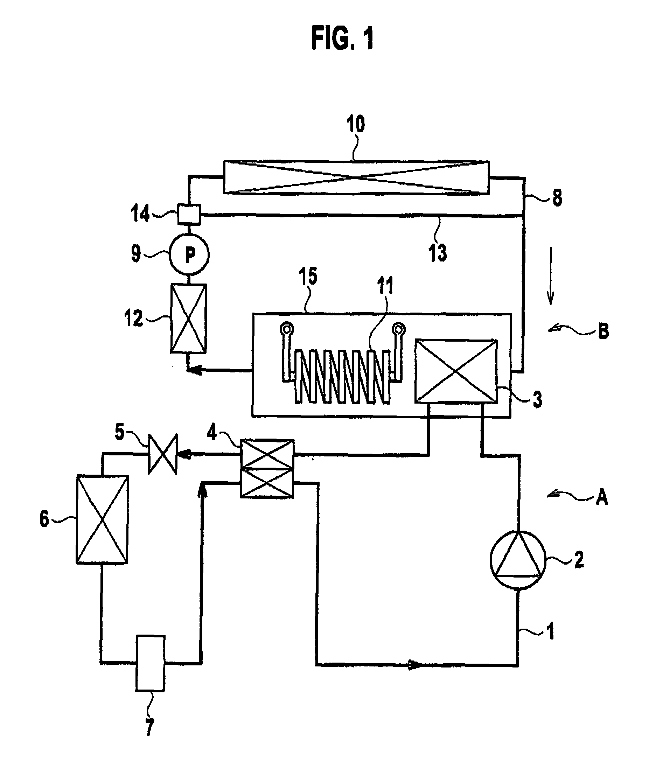

Fig. 1 is a system block diagram of a vehicle air conditioning system according to a first embodiment of the present invention. The vehicle air conditioning system according to the present embodiment is a combination of a heat-pump cooler A and a heater circulator B.

The heat-pump cooler A includes a first circulation channel 1 in which carbon dioxide serving as a first coolant is filled. The heat-pump cooler A is so configured that this first circulation channel 1 sequentially includes a compressor 2, a water-cooling condenser 3 serving as a condenser, an internal heat exchanger 4, an expansion valve 5 serving as an expander, an evaporator 6, and an accumulator 7.

The compressor 2 sucks the first coolant with relatively low temperature and pressure, and compresses the sucked first coolant, thus discharging the resultant first coolant as a coolant with high temperature and pressure.

The water-cooling condenser 3 is placed inside a machinery housing cabin 15 in a second circulation channel 8. The first coolant is compressed and transferred from the compressor 2 to the water-cooling condenser 3 so as to be cooled by a second coolant. In other words, heat is exchanged between the first coolant and the second coolant in the water-cooling condenser 3. Thus, the second coolant is heated by the first coolant.

The internal heat exchanger 4 causes heat to be exchanged between the first coolant having been transferred from the water-cooling condenser 3 and the first coolant with a lower temperature having been transferred from the accumulator 7. Thereby, the first coolant having been transferred from the water-cooling condenser 3 is further cooled.

The expansion valve 5 expands (decompresses) the first coolant having passed the internal heat exchanger 4, and transfers the resultant first coolant as a gas with lower temperature and pressure to the evaporator 6.

The evaporator 6 causes heat to be exchanged between the first coolant having been transferred from the expansion valve 5 and the air passing the evaporator 6. Thus, the air passing the evaporator 6 is cooled by the first coolant.

The accumulator 7 separates the first coolant having been transferred from the evaporator 6 into the first gas-phase coolant and the first liquid-phase coolant. Thus, the accumulator 7 transfers only the first gas-phase coolant to the internal heat exchanger 4, and temporarily reserves the first liquid-phase coolant in the accumulator 7.

The heater circulator B includes the second circulation channel 8 in which liquids including water and an antifreeze as the second coolant are filled. This second circulation channel 8 sequentially includes a pump 9, a radiator 10, the machinery housing cabin 15 and a heater core 12. The machinery housing cabin 15 is a space whose cross-sectional area is larger than that of the second circulation channel 8. The water-cooling condenser 3 and an electric heater 11 serving as a heater are housed inside the machinery housing cabin 15.

In order to circulate the second coolant in the second circulation channel 8, the pump 9 compresses the second coolant which the pump 9 sucks, and transfers the resultant second coolant. The liquid coolant resulting from being compressed by and transferred from the pump 9 circulates in the second circulation channel 8 while remaining in the liquid phase without changing its liquid phase, and thus changes in sensible heat through heat exchange.

The radiator 10 causes the second coolant to release its heat to the external air. To this end, the external air is blown to the radiator 10 by an electrically-powered fan and a wind occurring while the vehicle is running. Thus, heat is exchanged between the second coolant and the external air.

The electric heater 11 is provided downstream of the water-cooling condenser 3. When electrified, the electric heater 11 generates heat, and thus heats the second coolant.

The heater core 12 causes heat to be exchanged between the second coolant and the air passing the heater core 12, and thus heats the air passing the heater core 12.

The second circulation channel 8 includes a radiator bypass passage 13 bypassing the radiator 10. The flow of the second coolant can be switched to the radiator 10 or the radiator bypass passage 13 by switching a passage switching valve 14 provided upstream of the radiator bypass passage 13.

Next, descriptions will be provided for how the vehicle air conditioning system according to the first embodiment operates during its heating operation and during its cooling operation.

During the heating operation and the cooling operation, the heat-pump cooler A operates, and the first coolant circulates through a constant route in the first circulation channel. Thus, the second coolant is heated by the first coolant which flows in the water-cooling condenser 3, and whose temperature is higher than that of the second coolant.

During the heating operation, the air passing the heater core 12 is heated because the second coolant whose temperature becomes higher as a result of being heated by the water-cooling condenser 3 flows in the heater core 12. Thereby, warm air can be taken into the vehicle cabin. Additionally, in order to prevent heat from being further released from the second coolant having released its heat in the heater core 12, the second coolant is made to flow into the radiator bypass passage 13 by switching the passage switching passage 14. With this, the second coolant is heated by the water-cooling condenser 3 once again without releasing its heat in the radiator 10.

During this heating operation, once the electric heater 11 is turned on, the second coolant having been heated by the water-cooling condenser 3 is further heated by the electric heater 11. Thereby, the vehicle air conditioning system can obtain a higher heating performance. The air passing the evaporator 6 is cooled by the evaporator 6. For this reason, the air having passed the evaporator 6 is not made to flow into the vehicle cabin, but is discharged to the engine room and the like.

During the cooling operation, the electric heater 11 is turned off and the passage switching valve 14 is switched to cause the second coolant to flow into the radiator 10. With this, the second coolant having absorbed heat in the water-cooling condenser 3 can release its heat in the radiator 10.

Specifically, the vehicle air conditioning system performs its cooling operation by operating the heat-pump cooler A, and concurrently the second coolant is heated by the water-cooling condenser 3. When the air condition system needs heat produced by the heater core 12, warm air having passed the heater core 12 is taken into the vehicle cabin. When the air conditioning system needs no heat from the second coolant, the passage switching valve 14 is switched such that the second coolant releases its heat in the radiator 10. In addition, when the vehicle air conditioning system performs its heating operation efficiently with its best performance, the passage switching valve 14 is switched such that the second coolant passes the radiator bypass passage 13 without passing the radiator 10.

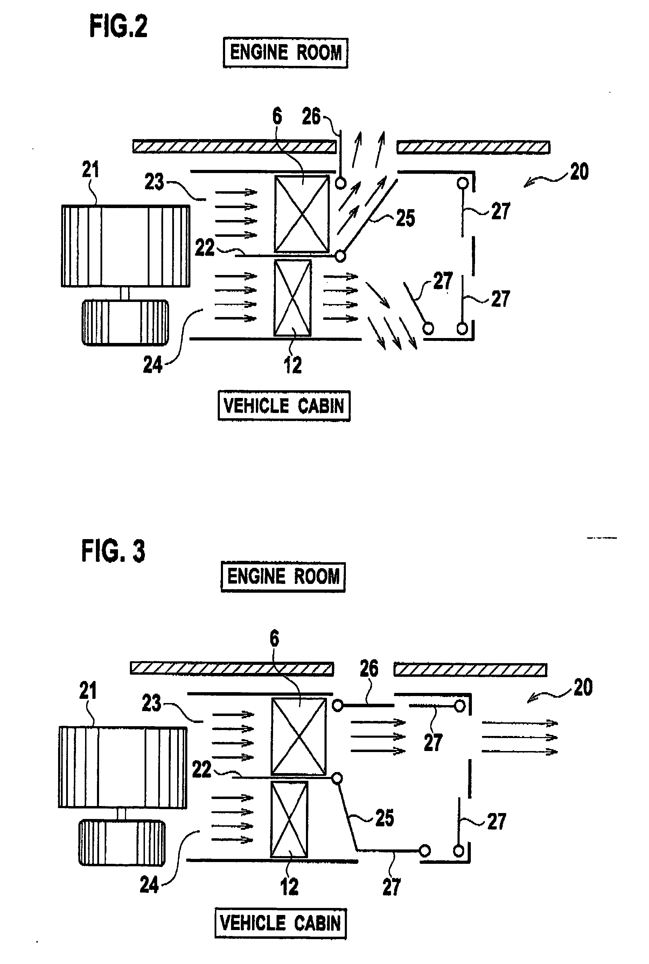

Next, descriptions will be provided for the configuration of an air conditioning duct 20 in the vehicle air conditioning system according to the first embodiment by referring to Figs. 2 and 3. Figs. 2 and 3 are schematic block diagrams each showing the configuration of the air conditioning duct 20. Fig. 2 shows how the air conditioning duct 20 is configured during the heating operation. Fig. 3 shows how the air conditioning duct 20 is configured during the cooling operation.

The air conditioning duct includes a blower fan 21. The blower fan 21 takes internal air or external air into the air conditioning duct 20, and blows the air from the air conditioning duct 20 to the vehicle cabin. Part of the inside of the air conditioning duct 20 is separated into two parallel passages 23, 24 by partitioning plate 22 serving as separation means. The evaporator 6 is provided in one passage 23, whereas the heater core 12 is provided in the other passage 24, in such a way that the evaporator 6 and the heater core 12 are in parallel to each other. Thereby, out of air-conditioned air taken into the air conditioning duct 20, part of the air-conditioned air to flow into the passage 23 is cooled by the evaporator 6, the other part of the air-conditioned air to flow into the passage 24 is heated by the heater core 12.

A mixture door 25 serving as mixture means is provided downstream of the partitioning plate 22. The mixture door 25 is a valve capable of closing the passage 23 on the side of the evaporator 6 or the passage 24 on the side of the heater core 12. A bypass door 26 is provided in a part of the side panel of the air conditioning duct 20, and the bypass door 26 causes the air condition duct 20 to communicate with the outside of the vehicle cabin, for instance, the engine room. When the mixture door 25 closes the passage 23 on the side of the evaporator 6, the bypass door 26 opens, and thus the air-conditioned air having been cooled by the evaporator 6 is discharged to the outside of the vehicle cabin. Multiple mode doors 27 serving as air allocation means are provided in the downstream end of the air conditioning duct 20, and the multiple mode doors 27 cause the air conditioning duct 20 to communicate with the vehicle cabin. By changing the combination of mode doors 27 to be opened, the air-conditioned air can be blown to a desired position in the vehicle cabin.

Next, descriptions will be provided for how the air conditioning duct 20 operates during the heating operation and during the cooling operation.

During the heating operation, as shown in Fig. 2, the low-temperature air-conditioned air passed the evaporator 6 is discharged to the outside of the vehicle cabin by closing the passage 23 on the side of the evaporator 6 by use of the mixture door 25, and concurrently by opening the bypass door 26. In addiction, the high-temperature air-conditioned air passed the heater core 12 is blown into the inside of the vehicle cabin by opening at least one of the mode doors 27.

During the cooling operation, as shown in Fig. 3, the passage 24 on the heater core 12 is closed by the mixture door 25. In addition, the bypass door 25 is closed, and at least one of the mode doors 27 is opened. Thereby, the low-temperature air-conditioned air passed the evaporator 6 is blown into the inside of the vehicle cabin.

Moreover, during the heating operation and during the cooling operation, the mixture ratio between the low-temperature air-conditioned air resulting from passing the evaporator 6 and the high-temperature air-conditioned air resulting from passing the heater core 12 can be changed by controlling the opening of the mixture door 25. This makes it possible to control the temperature of the air-conditioned air to be blown into the inside of the vehicle cabin.

In the first embodiment, as described above, the first coolant in the heat-pump cooler A may be circulated through the constant route in the first circulation channel 1 for both the heating and cooling operations. In addition, the heater circulator B may have the configuration in which the second coolant which receives heat from the water-cooling condenser 3 is circulated in the channel passing the heater core 12 and the radiator 10. Then, in the first embodiment, the vehicle air conditioning system can be used for both cooling and heating by causing the heat received from the water-cooling condenser 3 to be released to the air outside the vehicle cabin by the radiator 10, and by causing the heat received from the water-cooling condenser 3 to be released from the heater core 12 to the inside of the vehicle cabin. Consequently, in the system for heating and cooling by use of the heat-pump cooler A, the configuration of the heat-pump cooler A can be simplified, and the overall configuration of the air conditioning system can be simple as well.

Furthermore, the coolant in the second circulation channel remains a liquid, and accordingly does not change its phase. The coolant changes its sensible heat. This enhances the heat-transfer efficiency of the vehicle air conditioning system, and accordingly enables the vehicle air conditioning system to be compact.

In the first embodiment, the second circulation channel 8 includes: the radiator bypass passage 13 bypassing the radiator 10; and the passage switching valve 14 for switching the passage such that the second coolant flows into the radiator 10 or the radiator bypass passage 13. In the first embodiment, the channel can be changed selectively to allow the second coolant to pass or not to pass the radiator 10. Accordingly, the vehicle air conditioning system is capable of preventing its heating performance from decreasing.

In the first embodiment, during the heating operation, the air-conditioned air can be heated by using both heat produced in the heat-pump cooler A and heat generated by the electric heater 11. Thus, the vehicle air conditioning system is able to exert a sufficient heating performance even under a condition where the outdoor temperature is extremely low, even when the vehicle has no large heat source configured of an engine or the like, the above-described configuration is able to exert a sufficient heating performance under a condition where the outdoor temperature is extremely low.

In the first embodiment, the condenser 3 is of a water-cooling type. Because the condenser 3 has a heat transfer efficiency which is better than that of an air-cooling condenser, the condenser 3 can be compact, and the passage resistance of the first coolant can be reduced. This makes it possible to reduce an electric power needed for the compressor 2 to such an extent that the passage resistance is reduced, and accordingly to save the driving force of the compressor 2, as well as enabling the compressor 2 to be compact.

Moreover, because the water-cooling condenser 3 is placed upstream of the electric heater 11, the water-cooling condenser 3 whose surface temperature is lower than that of the electric heater 11 exchanges heat with the second coolant earlier than the electric heater 11 exchanges heat with the second coolant. This makes the difference in temperature between the water-cooling condenser 3 and the second coolant larger to a maximum extent, and accordingly enhances the heat exchange efficiency of the water-cooling condenser 3.

In addition, during the heating operation, the air-conditioned air having passed the evaporator 6 is discharged to the outside of the vehicle cabin through the air conditioning duct 20 by causing the mixture door 25 to close the passage 23 on the side of the evaporator 6, and concurrently by opening bypass door 26. This prevents the low-temperature air-conditioned air from being mixed with the high-temperature air-conditioned air heated by the heater core 12, and accordingly enhances the heating performance of the vehicle air conditioning system.

Furthermore, the air-conditioned air cooled by the evaporator 6 and the air-conditioned air heated by the heater core 12 can be mixed with a predetermined ratio by changing the opening of the mixture door 25. Thus, the temperature of air-conditioned air blown out of the air conditioning duct can be set at a desired temperature on the basis of the passenger's temperature setting and the outdoor temperature.

Moreover, because carbon dioxide is used as the first coolant, the saturation pressure of the first coolant can be kept high, and the flow rate of the coolant can be secured more reliably.

### (Second Embodiment)

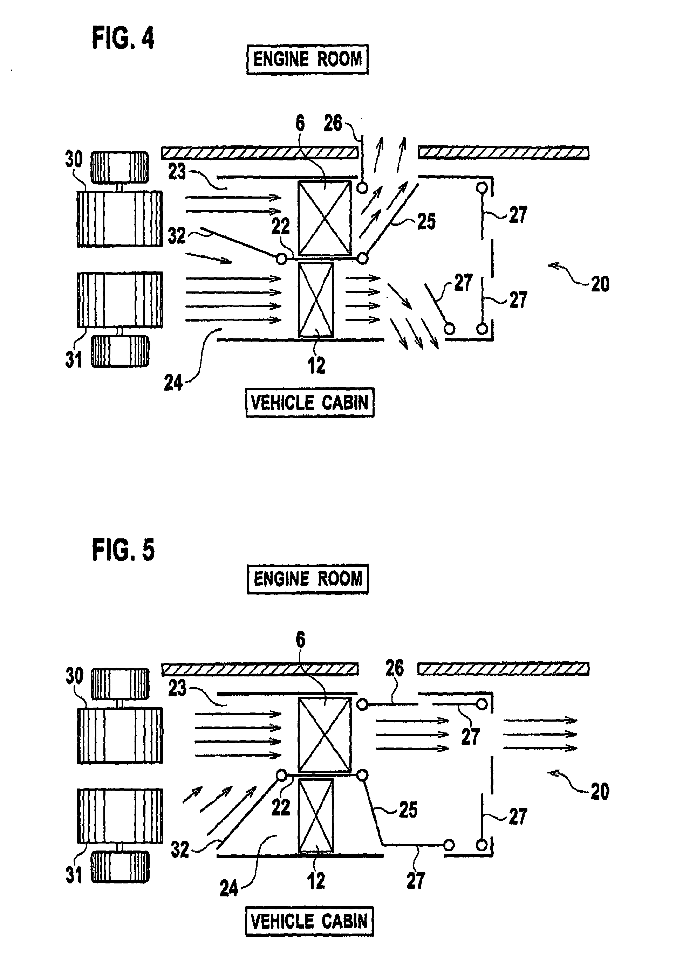

The second embodiment is the same as the first embodiment in that the vehicle air conditioning system is configured by including the heat-pump cooler A and the heater circulator B. However, the second embodiment is different from the first embodiment in terms of the configuration of the air conditioning duct 20. Figs. 4 and 5 are schematic block diagrams each showing the configuration of the air conditioning duct 20. Fig. 4 shows how the air conditioning duct 20 is configured during a heating operation. Fig. 5 shows how the air conditioning duct 20 is configured during a cooling operation.

Two blower fans 30, 31 are provided in parallel with each other in the air conditioning duct 20 according to the second embodiment. The two blower fans 30, 31 are provided there in such a way that one blower fan 30 can easily blow the air to the passage 23 on the side of the evaporator 6, whereas the other blower fan 31 can easily blow the air to the passage 24 on the side of the heater core 12. An air allocation door 32 is provided upstream of the partitioning plate 22. The air allocation ratio between the amount of air from one blower fan 30 and the amount of air from the other blower fan 31 can be changed by changing the angle of the air allocation door 32.

During the heating operation, as shown in Fig. 4, low-temperature air-conditioned air having passed the evaporator 6 is discharged to the outside of the vehicle cabin by causing the mixture door 25 to close the passage 23 on the side of the evaporator 6, and concurrently by opening the bypass door 26. Furthermore, high-temperature air-conditioned air having passed the heater core 12 is blown to the inside of the vehicle cabin by opening at least one of the mode doors 27.

During the cooling operation, as shown in Fig. 5, the passage 24 on the side of the heater core 12 is closed by the mixture door 25. Furthermore, low-temperature air-conditioned air having passed the evaporator 6 is blown to the inside of the vehicle cabin by closing the bypass door 26, and concurrently by opening at least one of the mode doors 27.

Moreover, the angle of the air allocation door 32 is changed so as to change the air allocation ratio between the air blown to the passage 23 on the evaporator 6 side and the air blown to the passage 24 on the heater core 12 side. Thus, the amount of warm or cold air to be blown to the inside of the vehicle cabin can be controlled. For instance, during a full cool operation, as shown in Fig. 5, the passage 24 on the heater core 12 side is fully closed by the air allocation door 25. Thus, all the amount of air from the blower fans 30, 31 can be blown to the evaporator 6 side, and subsequently to the inside of the vehicle cabin.

In addition, the amount of cold air from the evaporator 6 side and the amount of warm air from the heater core 12 side can be controlled by controlling the two blower fans 30, 31. This also makes it possible to control the temperature of the air to be blown to the inside of the vehicle cabin, and accordingly to control the heating performance and the cooling performance of the vehicle air conditioning system.

In the second embodiment, the two blower fans 30, 31 are provided in the air conditioning duct 20: one blower fan 30 blows the air to the evaporator 6; and the other fan 31 blows the air to the heater core 12. Consequently, the heating performance and the cooling performance can be controlled by controlling outputs from the respective two blower fans 30, 31.

Furthermore, the angle of the air allocation door 32 is changed so as to change the air allocation ratio between the air blown to the passage 23 on the evaporator 6 side and the air blown to the passage 24 on the heater core 12 side. Thus, the amount of warm or cold air to be blown to the inside of the vehicle cabin can be controlled, and thereby the heating performance and the cooling performance can be controlled with a finer tuning. Moreover, it is possible to increase the maximum amount of air to be blown to the inside of the vehicle cabin by causing the air allocation door 32 to fully close the passage 23 on the evaporator 6 side or the passage 24 on the heater core 12 side, and concurrently by causing the blower fans 30, 31 to operate at the same time.

### (Third Embodiment)

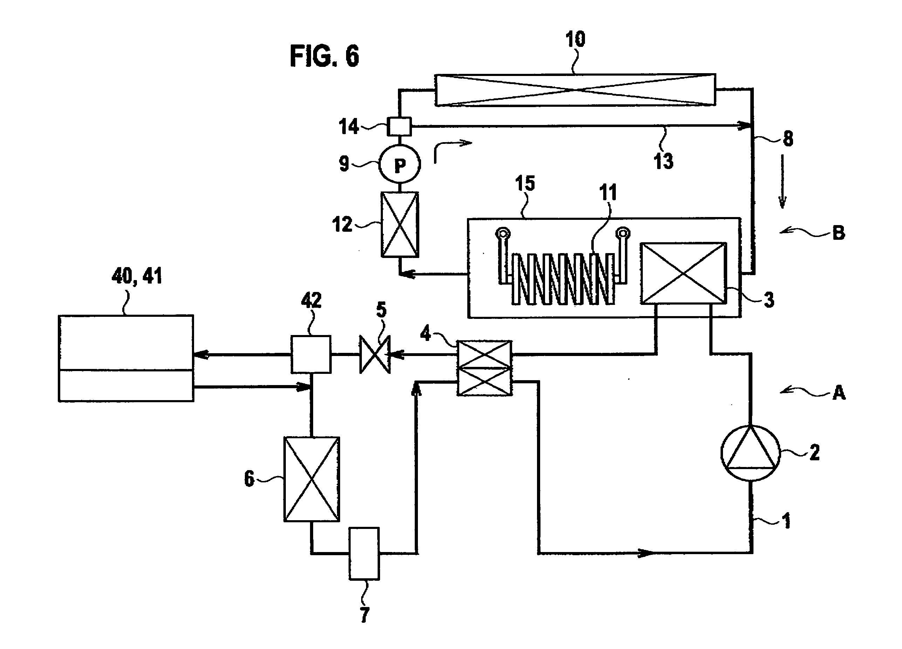

Fig. 6 is a system block diagram of a vehicle air conditioning system according to a third embodiment. As shown in Fig. 6, the comparison between the third embodiment and the first embodiment shows that, in the third embodiment, a passage switching valve 42 is provided between the expansion valve 5 and the evaporator 6. The passage switching valve 42 allows the first coolant to return to the evaporator 6 after passing a motor 40 and an inverter 41.

The rest of the configuration of the third embodiment is the same as that of the first embodiment. For this reason, the same components are denoted by the same reference numerals, and descriptions thereof are omitted.

During a heating operation, the passage is switched by use of the passage switching valve 42 such that the first coolant having passed the expansion valve 5 can be transferred to the evaporator 6 after passing the motor 40 and the inverter 41. This heats the second coolant with heat generated in the motor 40 and the inverter 41, and accordingly enhances the heating performance further.

### (Fourth Embodiment)

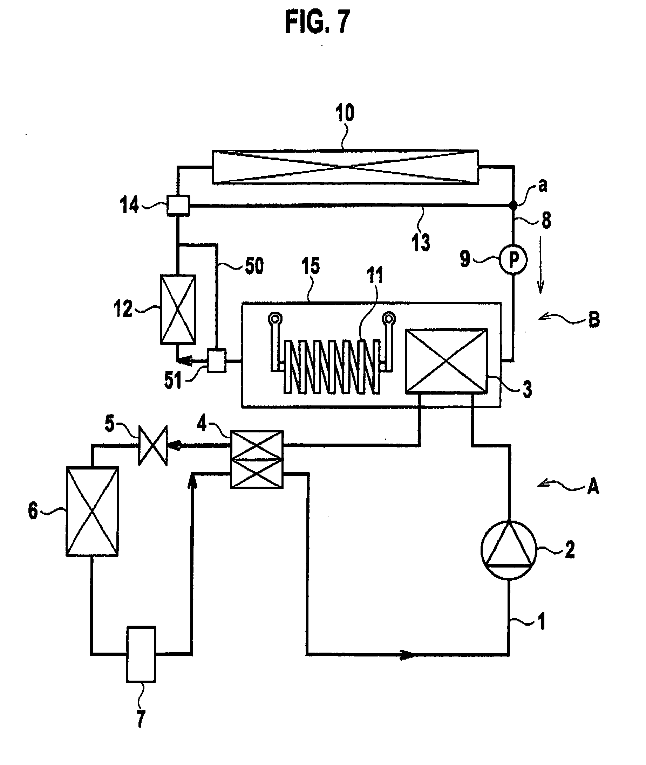

Fig. 7 is a system block diagram of a vehicle air conditioning system according to a fourth embodiment. In the fourth embodiment, the second circulation channel 8 includes: a heater core bypass passage 50 bypassing the heater core 12; and a passage switching valve 51 for switching the passage such that the second coolant flows into the heater core 12 or the heater core bypass passage 50. Thus, the second coolant is controlled by switching the passage switching valve 51 such that the second coolant flows into the heater core 12 during the heating operation. In addition, the second coolant is controlled by switching the passage switching valve 51 such that the second coolant flows into the heater core bypass passage 50 during the cooling operation.

The pump 9 is provided between a position where the water-cooling condenser 3 is placed and a point which is at the outlet side of the radiator 10, and which is a confluent point a where the radiator 10 and the radiator bypass passage 13 come together.

The rest of the configuration of the fourth embodiment is the same as that of the first embodiment. For this reason, the same components are denoted by the same reference numerals, and descriptions thereof are omitted.

In the fourth embodiment, the second coolant can be prevented from releasing its heat in the heater core 12 during a cooling operation. For this reason, even though the vehicle air conditioning system has the configuration in which air-conditioned air having passed the evaporator 6 subsequently passes the inside of the heater core, the air-conditioned air cooled by the evaporator 6 is not reheated.

In the fourth embodiment, even if the second coolant flows via the heater core bypass passage 50 due to failure or the like of the passage switching valve 51 during a heating operation, the pump 9 sucks the second coolant which flows in the radiator bypass passage 13, and whose temperature decreases in the process of the second coolant's pass of the radiator bypass passage 13. Thereby, the pump 9 can be prevented from sucking the high-temperature second coolant immediately after the second coolant is heated by the electric heater 11. This enhances the reliability and durability of the pump 9.

The pump 9 may be provided in a position between the water-cooling condenser 3 and the electric heater 11.

### (Modifications)

In the above-described embodiments, the electric heater 11 is used as the heater. However, even if a burning heater is used as the heater, the same operation effect can be obtained.

In the above-described embodiments, carbon dioxide is used as the first coolant, while liquids including water and an antifreeze are used as the second coolant. However, other substances may be used as the coolants.

In the above-described embodiments, the evaporator 6 and the heater core 12 inside the air conditioning duct 20 are placed in parallel to each other. However, the evaporator 6 and the heater core 12 may be placed in series in a way that the evaporator 6 is located upstream of the heater core 12 to enhance the dehumidifying/heating effect. In addition, although not illustrated, the air to be introduced to the blower fans 21, 30, 31 can be introduced from the inside or the outside of the vehicle cabin depending on the necessity. In a case where the air having been cooled while passing the evaporator 6 is discharged to the engine room and the like, it is desirable to introduce the air from the outside of the vehicle correspondingly to the discharge.

The foregoing descriptions have been provided for the present invention on the basis of the embodiments. However, the present invention is not limited to these embodiments. The configuration of each part may be replaced with an arbitrary configuration having the same function.

### INDUSTRIAL APPLICABILITY

It is possible to provide the system for heating and cooling by use of the heat-pump cooler, specifically, the vehicle air conditioning system which enables the configuration of the heat-pump cooler to be simplified, and which accordingly has a simple overall configuration as the air conditioning system.

## Claims

1. A vehicle air conditioning system comprising:
a heat-pump cooler including a first circulation channel for circulation of a first coolant; and
a heating circulator including a second circulation channel for circulation of a second coolant,
wherein the first circulation channel of the heat-pump cooler includes
a compressor configured to compress the first coolant,
a condenser disposed in the second circulation channel and configured to cause heat of the first coolant to be released to the second coolant,
an expander configured to expand the first coolant, and
an evaporator configured to cool the air by a heat exchange between the first coolant expanded by the expander and the air,
wherein the second circulation channel of the heating circulator includes
a pump configured to circulate the second coolant,
a heater core configured to heat the air by a heat exchange between the second coolant and the air, and
a radiator configured to cause heat of the second coolant to be released, the second coolant being a fluid and exchanging heat with the air through sensible heat transfer,
wherein the radiator releases heat to the air outside a vehicle cabin, and
wherein the evaporator and the heater core are disposed inside an air conditioning duct allowing the air to be introduced by a fan into the vehicle cabin, the air having passed the air conditioning duct being introduced as air-conditioned air into the vehicle cabin.

2. The vehicle air conditioning system according to claim 1, further comprising:
a radiator bypass passage configured to bypass the radiator; and
a passage switching valve configured to switch passages such that the second coolant flows into any one of the radiator and the radiator bypass passage.

3. The vehicle air conditioning system according to claim 1, further comprising:
a heater core bypass passage configured to bypass the heater core; and
a passage switching valve configured to switch passages such that the second coolant flows into any one of the heater core and the heater core bypass passage.

4. The vehicle air conditioning system according to claim 1, wherein the second circulation channel includes a heater configured to heat the second coolant.

5. The vehicle air conditioning system according to claim 4, wherein the condenser is provided upstream of the heater and downstream of the radiator, in the second circulation channel.

6. The vehicle air conditioning system according to claim 1, further comprising discharge means for discharging at least part of air-conditioned air cooled by the evaporator to the outside of the vehicle cabin.

7. The vehicle air conditioning system according to claim 1,
wherein the evaporator and the heater core are provided in parallel to each other inside the air conditioning duct,
the vehicle air conditioning system further comprising:
separation means for separating air-conditioned air to flow toward the evaporator and air-conditioned air to flow toward the heater core; and
mixture means for mixing air-conditioned air cooled by the evaporator and air-conditioned air heated by the heater core together with a predetermined ratio.

8. The vehicle air conditioning system according to claim 1, wherein the fan includes a first fan configured to blow air-conditioned air toward the evaporator and a second fan configured to blow air-conditioned air toward the heater core.

9. The vehicle air conditioning system according to claim 8, further comprising air allocation means capable of changing a mixture ratio between the air-conditioned air to flow toward the evaporator and the air-conditioned air to flow toward the heater core, out of the air-conditioned air blown by the first fan and the air-conditioned air blown by the second fan.

10. The vehicle air conditioning system according to claim 1, wherein the first coolant is carbon dioxide.

11. The vehicle air conditioning system according to claim 2, wherein
during a heating operation, the second coolant is made to flow into the radiator bypass passage by switching the passage switching valve, and the air heated by the heater core is introduced as air-conditioned air into the vehicle cabin, and
during a cooling operation, the second coolant is made to flow into the radiator by switching the passage switching valve, and the air cooled by the evaporator is introduced as air-conditioned air into the vehicle cabin.

12. The vehicle air conditioning system according to claim 3, wherein
during a heating operation, the second coolant is made to flow into the heater core by switching the passage switching valve, and
during a cooling operation, the second coolant is made to flow into the heater core bypass passage by switching the passage switching valve.

13. The vehicle air conditioning system according to claim 12, wherein the pump is provided at an outlet side of the radiator and between a position of the condenser and a confluent point where the radiator and the radiator bypass passage come together.
